(19) **Europäisches Patentamt / European Patent Office / Office européen des brevets**

(11) **EP 3 682 195 B1**

(12) **FASCICULE DE BREVET EUROPEEN**

(45) Date de publication et mention
de la délivrance du brevet:
**30.10.2024   Bulletin 2024/44**

(21) Numéro de dépôt: **18785420.3**

(22) Date de dépôt: **13.09.2018**

(51) Classification Internationale des Brevets (IPC):
**G01C 22/00** *(2006.01)*      **A61B 5/11** *(2006.01)*
**G01C 21/16** *(2006.01)*

(52) Classification Coopérative des Brevets (CPC):
**G01C 22/00; G01C 21/166**

(86) Numéro de dépôt international:
**PCT/FR2018/052248**

(87) Numéro de publication internationale:
**WO 2019/053380 (21.03.2019 Gazette 2019/12)**

(54) **PROCÉDÉ DE SÉLECTION D'ALGORITHMES DE DÉTERMINATION DE LA TRAJECTOIRE, PROGRAMME ET DISPOSITIFS POUR SA MISE EN OEUVRE**

**VERFAHREN ZUR AUSWAHL VON PFADBESTIMMUNGSALGORITHMEN, PROGRAMM UND VORRICHTUNGEN ZUR IMPLEMENTIERUNG DAVON**

**METHOD FOR SELECTING PATH-DETERMINATION ALGORITHMS, PROGRAM AND DEVICES FOR IMPLEMENTING SAME**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:   **13.09.2017   FR 1758490**

(43) Date de publication de la demande:
**22.07.2020   Bulletin 2020/30**

(73) Titulaire: **Université Gustave Eiffel
77454 Marne-la-Vallée Cedex 2 (FR)**

(72) Inventeurs:
* **RENAUDIN, Valérie
  44340 Bouguenais (FR)**
* **ORTIZ, Miguel
  44830 Brains (FR)**

(74) Mandataire: **Cabinet Beau de Loménie
158, rue de l'Université
75340 Paris Cedex 07 (FR)**

(56) Documents cités:
**US-A1- 2012 083 705      US-A1- 2014 378 786
US-A1- 2016 138 935**

**Description**

Domaine de l'invention

La présente invention concerne la détermination d'une trajectoire d'un utilisateur susceptible de se mouvoir selon plusieurs modes de mouvement.

Par « trajectoire », on entend l'ensemble des positions d'un utilisateur sur une plage de temps déterminée.

Par « mode de mouvement », on entend un ensemble de mouvements présentant une ou plusieurs caractéristiques communes reconnaissables en analysant certaines propriétés du mouvement de l'utilisateur. La marche à pied, la course à pied, le déplacement à bord d'un véhicule automobile, le déplacement sur une bicyclette, le déplacement en métro, le déplacement sur un engin motorisé de type Segway ®, sont des exemples de mode de mouvement.

Arrière-plan de l'invention

Divers types de dispositifs aptes à déterminer une trajectoire d'un utilisateur sont actuellement disponibles dans le commerce.

Parmi ces dispositifs, on connaît notamment :

- les navigateurs GNSS (« Global Navigation Satellite System » en anglais pour « système mondial de navigation par satellite ») aptes à être installés sur un tableau de bord d'un véhicule automobile ;
- les téléphones intelligents (aussi connus sous le nom anglais de « smartphones ») pourvus d'applications de géo-localisation ;
- les dispositifs aptes à être installés au niveau du pied de l'utilisateur (par exemple sur une chaussure) et permettant à l'utilisateur d'obtenir une information sur sa trajectoire et/ou son activité physique ;
- les montres intelligentes (aussi connues sous le nom anglais de « smartwatches ») aptes à être portées au poignet de l'utilisateur et permettant à l'utilisateur d'obtenir une information sur sa trajectoire et/ou son activité physique.

Chacun des dispositifs évoqués ci-dessus est prévu pour un et un seul mode de mouvement : déplacement à bord d'un véhicule automobile, marche à pied, course à pied, etc.. Un utilisateur qui souhaite obtenir des informations sur sa trajectoire pour plusieurs modes de mouvement différents est donc contraint de transporter et d'utiliser successivement plusieurs dispositifs, ce qui est peu pratique.

En outre, ces différents dispositifs utilisent des capteurs différents pour déterminer la trajectoire de l'utilisateur. Par exemple, un navigateur GNSS peut ne comprendre qu'un récepteur satellitaire apte à recevoir un signal GNSS, tandis qu'un téléphone intelligent peut comprendre un récepteur satellitaire et un ou plusieurs accéléromètres. Par ailleurs, deux dispositifs différents peuvent utiliser des capteurs de même type mais de sensibilités ou de précisions différentes. Cela rend extrêmement difficile, voire impossible, d'utiliser ces différents dispositifs ensemble pour déterminer avec précision la trajectoire d'un utilisateur qui se meut successivement selon plusieurs modes de mouvement.

Enfin, certains de ces dispositifs dépendent, en partie ou complètement, de systèmes spécifiques dédiés déployés à l'avance (tels que des systèmes de type iBeacon™, RFID ou encore UWB (« Ultra-WideBand » en anglais)) et/ou d'informations acquises à l'avance (telles que des bases de données géo-localisées de signaux WiFi utilisées dans les méthodes dites « WiFi Fingerprinting » en anglais). Loin de ces systèmes spécifiques et/ou là où ces informations acquises à l'avance ne sont pas disponibles, la détermination de la trajectoire présente une erreur importante.

Par ailleurs, des dispositifs aptes à collecter des informations relatives l'activité d'un utilisateur sont décrits par les documents US2014/378786, US2016/138935 et US2012/083705.

Au vu des circonstances évoquées ci-dessus, il serait particulièrement avantageux d'avoir un dispositif et un procédé permettant de déterminer la trajectoire d'un utilisateur susceptible de se mouvoir selon plusieurs modes de mouvement, indépendamment de tout système spécifique déployé à l'avance et sans recourir à des informations acquises à l'avance.

Objet et résumé de l'invention

Le présent exposé vise à répondre au moins partiellement à ce besoin.

Le présent exposé concerne un procédé sélection d'un algorithme de détermination de trajectoire associé à un mode de mouvement d'un utilisateur susceptible de se mouvoir selon plusieurs modes de mouvement, comprenant :

l'acquisition de données comprenant une accélération et une vitesse angulaire d'un système de mesure ;
une étape de détection comprenant le fait de détecter si l'utilisateur change de mode de mouvement, et se déplace ainsi selon un nouveau mode de mouvement distinct d'un mode de mouvement dans lequel l'utilisateur se déplaçait jusqu'ici ; et
une étape de sélection comprenant le fait de sélectionner, dans le cas où il a été détecté dans l'étape de détection que l'utilisateur a changé de mode de mouvement et se déplace selon le nouveau mode de mouvement, un algorithme de détermination de trajectoire associé au nouveau mode de mouvement ;
dans lequel
le système de mesure est configuré pour être fixé de façon détachable à une pluralité de supports, et comprend un élément de coopération apte à coopérer avec un élément de guidage prévu sur chaque support de ladite pluralité de supports, et

l'étape de détection comprend le fait de détecter, à partir de l'accélération et de la vitesse angulaire acquises du système de mesure, un mouvement associé à la fixation du système de mesure sur un support, le mouvement étant défini au moins en partie par l'élément de guidage.

Comme mentionné précédemment, dans le procédé, l'étape de détection comprend le fait de détecter si l'utilisateur se déplace selon un nouveau mode de mouvement distinct d'un mode de mouvement actuel. Autrement dit, l'étape de détection comprend le fait de détecter si l'utilisateur se déplace selon un deuxième mode de mouvement qui est distinct d'un premier mode de mouvement dans lequel il se déplaçait jusqu'ici. De façon équivalente, on peut dire que l'étape de détection comprend le fait de détecter si l'utilisateur a changé de mode de mouvement.

Avec ce procédé, le changement de mode de mouvement est détecté en détectant un mouvement défini au moins en partie par l'élément de guidage, qui peut être simple et étudié à l'avance. Le changement de mode de mouvement peut donc être détecté avec un taux d'erreur faible, et significativement plus faible que celui des méthodes du type détection de contexte (« context détection » en anglais) mises en oeuvre sur certains téléphones mobiles.

Lorsque l'utilisateur change de mode de mouvement, il lui suffit de fixer le système de mesure sur un nouveau support, ce par quoi un algorithme de détermination de trajectoire associé au nouveau mode de mouvement est sélectionné. Il n'est donc pas demandé à l'utilisateur d'effectuer une opération plus complexe et/ou plus longue, comme par exemple manipuler plusieurs boutons et/ou interagir avec une interface homme-machine, comme cela est fréquemment le cas avec les dispositifs connus. L'expérience proposée à l'utilisateur est donc particulièrement simple et intuitive.

À chaque changement de mode de mouvement détecté, il est possible de sélectionner l'algorithme de détermination de trajectoire qui est le plus adapté au nouveau mode de mouvement, par exemple qui permet la détermination entachée de l'erreur la plus faible et/ou qui exploite au mieux les données susceptibles d'être le plus disponibles dans ce nouveau mode de mouvement.

Ainsi, le procédé selon le présent exposé permet de déterminer la trajectoire de l'utilisateur tout au long de son déplacement, avec un seul système de mesure et avec une erreur faible, indépendamment de tout système spécifique déployé à l'avance et sans recourir à des informations acquises à l'avance, et ce même si l'utilisateur change une ou plusieurs fois de mode de mouvement.

Dans certains modes de réalisation, le mouvement comprend une rotation du système de mesure par rapport au support, ladite rotation étant définie par l'élément de guidage.

La rotation définie par l'élément de guidage, qui peut être étudiée à l'avance, peut être détectée de manière très simple, à l'aide de la seule vitesse angulaire. Le changement de mode de mouvement peut donc être détecté avec un taux d'erreur encore plus faible.

Dans certains modes de réalisation,

chaque élément de guidage de chaque support de ladite pluralité de supports comprend un ensemble de reliefs qui est différent pour chaque support, l'étape de détection comprend le fait de détecter la venue en contact, durant ledit mouvement, de l'élément de coopération avec l'ensemble de reliefs, et l'étape de sélection comprend le fait de sélectionner l'algorithme de détermination de trajectoire en fonction de l'ensemble de reliefs avec lequel l'élément de coopération est venu en contact.

On notera que dans le présent exposé, « sélectionner A en fonction de B » n'exclut pas que d'autres éléments que B puissent être utilisés pour sélectionner A.

La venue en contact de l'élément de coopération avec l'ensemble de reliefs provoque des variations d'accélération, qui peuvent être étudiées à l'avance. Le changement de mode de mouvement peut donc être détecté avec un taux d'erreur encore plus faible. En outre, ces variations d'accélération apportent une information sur l'algorithme de détermination de trajectoire à sélectionner pour le nouveau mode de mouvement. L'algorithme peut ainsi être sélectionné uniquement à partir de données inertielles (accélération et vitesse angulaire), et donc indépendamment de tout système spécifique déployé à l'avance et sans recourir à des informations acquises à l'avance. Cette sélection peut aussi être effectuée dans des environnements difficiles, par exemple à l'intérieur de bâtiments ou dans un sous-sol, où d'autres données telles que des données satellite pourraient ne pas être disponibles.

Le présent exposé concerne également un procédé de détermination d'une trajectoire d'un utilisateur susceptible de se mouvoir selon plusieurs modes de mouvement, comprenant :

la sélection, à l'aide du procédé décrit ci-dessus, d'un algorithme de détermination de trajectoire associé à un nouveau mode de mouvement de l'utilisateur ; et
une étape de détermination de trajectoire comprenant le fait d'appliquer l'algorithme de détermination de trajectoire ainsi sélectionné aux données acquises après ladite sélection.

On notera que puisque la détermination de trajectoire est effectuée indépendamment de tout système spécifique déployé à l'avance, elle répond aux exigences de type « prise en compte du respect de la vie privée dès la conception » (« privacy by design » en anglais), qui sont de plus en plus fréquemment exigées par les réglementations en vigueur.

Dans certains modes de réalisation, le procédé de détermination d'une trajectoire d'un utilisateur comprend en outre une étape de transmission comprenant le fait de transmettre la trajectoire déterminée pendant l'étape de détermination à un dispositif extérieur.

La trajectoire déterminée peut ainsi être transmise à un dispositif extérieur, en vue d'être affichée à l'utilisateur ou bien en vue d'être analysée et/ou comparée avec la trajectoire réelle.

Le présent exposé concerne également un programme comportant des instructions pour l'exécution des procédés décrits ci-dessus lorsque ledit programme est exécuté par un ordinateur.

Dans un mode particulier de réalisation, les différentes étapes des procédés sont déterminées par des instructions de programme d'ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le présent exposé concerne également un support d'enregistrement lisible par ordinateur sur lequel est enregistré un programme d'ordinateur comportant des instructions pour l'exécution des procédés décrits ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (« floppy disk ») ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Le présent exposé concerne également un dispositif de détermination d'une trajectoire d'un utilisateur susceptible de se mouvoir selon plusieurs modes de mouvement, le dispositif comprenant :

un système de mesure comprenant un accéléromètre et un gyromètre ; et
une unité de calcul configurée pour mettre en oeuvre :

une étape de détection comprenant le fait de détecter si l'utilisateur change de mode de mouvement, et se déplace ainsi selon un nouveau mode de mouvement distinct d'un mode de mouvement dans lequel l'utilisateur se déplaçait jusqu'ici ;
une étape de sélection comprenant le fait de sélectionner, dans le cas où il a été détecté dans l'étape de détection que l'utilisateur a changé de mode de mouvement et se déplace selon le nouveau mode de mouvement, un algorithme de détermination de trajectoire associé au nouveau mode de mouvement ; et
une étape de détermination de trajectoire comprenant le fait d'appliquer l'algorithme de détermination sélectionné dans l'étape de sélection aux données acquises ;
dans lequel
le système de mesure est configuré pour être fixé de façon détachable à une pluralité de supports, et comprend un élément de coopération apte à coopérer avec un élément de guidage prévu sur chaque support de ladite pluralité de supports,
l'étape de détection comprend le fait de détecter, à partir de l'accélération et de la vitesse angulaire mesurées par l'accéléromètre et le gyromètre, un mouvement associé à la fixation du système de mesure sur un support, le mouvement étant défini au moins en partie par l'élément de guidage.

Dans certains modes de réalisation, le mouvement comprenant une rotation du système de mesure par rapport au support, ladite rotation étant définie par l'élément de guidage.

Dans certains modes de réalisation,

chaque élément de guidage de chaque support de ladite pluralité de supports comprend un ensemble de reliefs qui est différent pour chaque support,
l'étape de détection comprend le fait de détecter la venue en contact, durant ledit mouvement, de l'élément de coopération avec l'ensemble de reliefs, et
l'étape de sélection comprend le fait de sélectionner l'algorithme de détermination de trajectoire en fonction de l'ensemble de reliefs avec lequel l'élément de coopération est venu en contact.

Le programme, le support d'enregistrement et le dispositif décrits ci-dessus procurent les mêmes avantages que les procédés décrits ci-dessus.

Le présent exposé concerne également un système de détermination d'une trajectoire d'un utilisateur susceptible de se mouvoir selon plusieurs modes de mouvement, comprenant :

le dispositif décrit ci-dessus ; et
une pluralité de supports, l'élément de coopération étant apte à coopérer avec un élément de guidage prévu sur chaque support de ladite pluralité de supports.

Dans certains modes de réalisation, chaque élément de guidage de chaque support de ladite pluralité de supports comprenant un ensemble de reliefs qui est différent pour chaque support.

Le système décrit ci-dessus procure les mêmes avantages que les procédés décrits ci-dessus. De plus, puisqu'une pluralité de supports est fournie, l'utilisateur peut installer une fois pour toutes chaque support à une position correspondant au mode de mouvement qui lui est associé (par exemple sur le tableau de bord ou le pare-brise d'un véhicule pour le mode de mouvement « déplacement à bord d'un véhicule automobile »), de sorte que, lorsqu'il se déplace, l'utilisateur n'a plus qu'à attacher et détacher le système de mesure.

En outre, chaque support peut être prévu pour être installé à la position la plus adaptée possible pour chaque mode de mouvement, ce qui améliore la précision de la détermination de trajectoire.

### Brève description des dessins

Le présent exposé sera bien compris et les avantages évoqués ci-dessus apparaîtront mieux, à la lecture de la description détaillée qui suit de plusieurs modes de réalisations, représentés à titre d'exemples non limitatifs. La description se réfère aux dessins annexés sur lesquels :

- la figure 1 est un schéma fonctionnel du système de mesure ;
- les figures 2A et 2B constituent une vue éclatée d'un mode de réalisation du système de détermination d'une trajectoire d'un utilisateur, la figure 2A représentant le système de mesure et la figure 2B représentant un support auquel le système de mesure peut être fixé de façon détachable ;
- la figure 2C représente une variante du support de la figure 2B ;
- la figure 3A est une vue partielle en perspective d'une partie de la figure 2, montrant l'élément de guidage et l'élément de coopération selon le mode de réalisation ;
- la figure 3B est une coupe partielle en perspective de la figure 3A selon IIIB-IIIB ;
- les figures 4A et 4B sont des vues en perspective montrant le mouvement associé à la fixation du système de mesure sur le support ;
- les figures 5A à 5C sont des coupes de la figure 4B selon V-V, illustrant différentes phases de la rotation illustrée sur la figure 4B ;
- les figures 6A à 6D sont des diagrammes illustrant schématiquement l'accélération et la vitesse angulaire acquises par le système de mesure pendant la rotation illustrée sur la figure 4B, et le principe de la détection de l'ensemble de reliefs avec lequel l'élément de coopération est venu en contact.

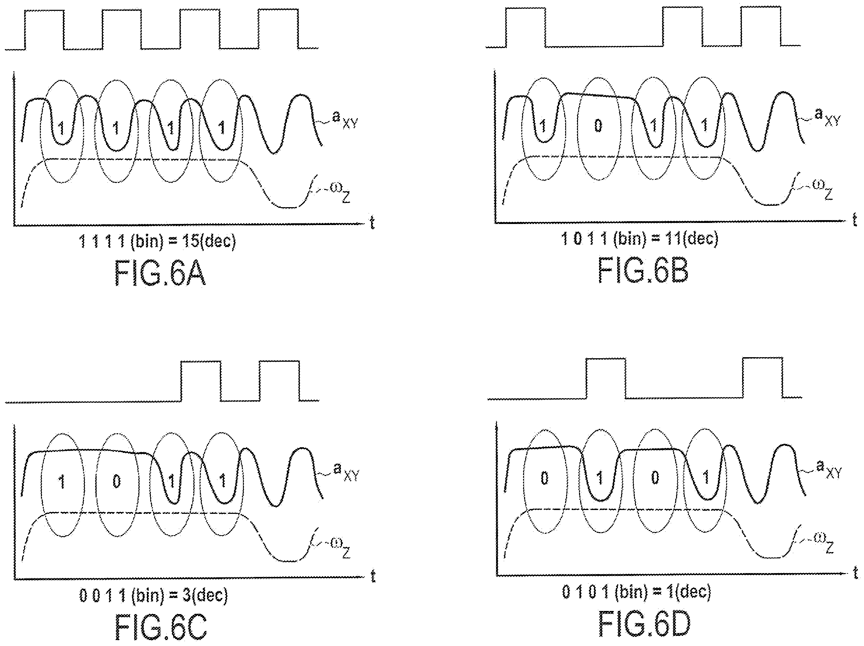

Sur les figures 6A à 6D et dans la description qui suit, « bin » symbolise un nombre exprimé en binaire, et « dec » symbolise un nombre exprimé en base 10.

### Description détaillée de l'invention

Dans ce qui suit, on va décrire un système de détermination d'une trajectoire d'un utilisateur (ci-après « le système ») 1. Le système comprend un dispositif de détermination d'une trajectoire d'un utilisateur (ci-après « le dispositif »), et une pluralité de supports 120 décrits plus loin, dont un seul est représenté sur les figures. Le dispositif comprend un système de mesure 10 et une unité de calcul.

### Système de mesure et unité de calcul

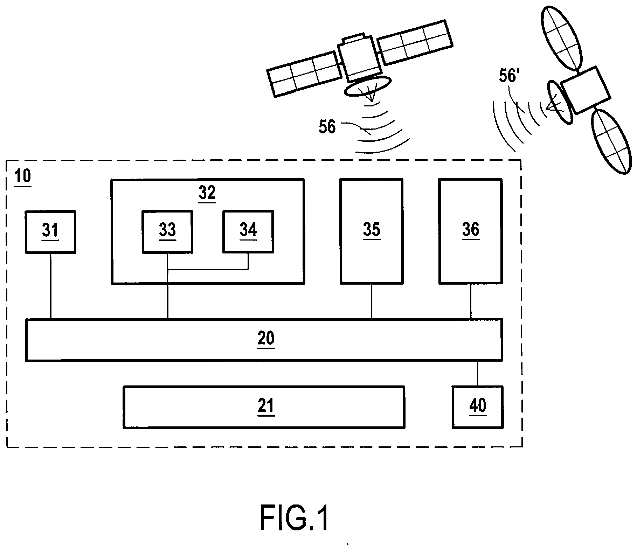

La figure 1 présente un schéma fonctionnel du système de mesure 10.

Le système de mesure 10 comprend une centrale inertielle 32 (IMU pour « Inertial Measurement Unit » en anglais) comprenant un accéléromètre 33 et un gyromètre 34.

L'accéléromètre 33 est configuré pour mesurer une accélération du système de mesure 10, et le gyromètre 34 est configuré pour mesurer une vitesse angulaire du système de mesure 10.

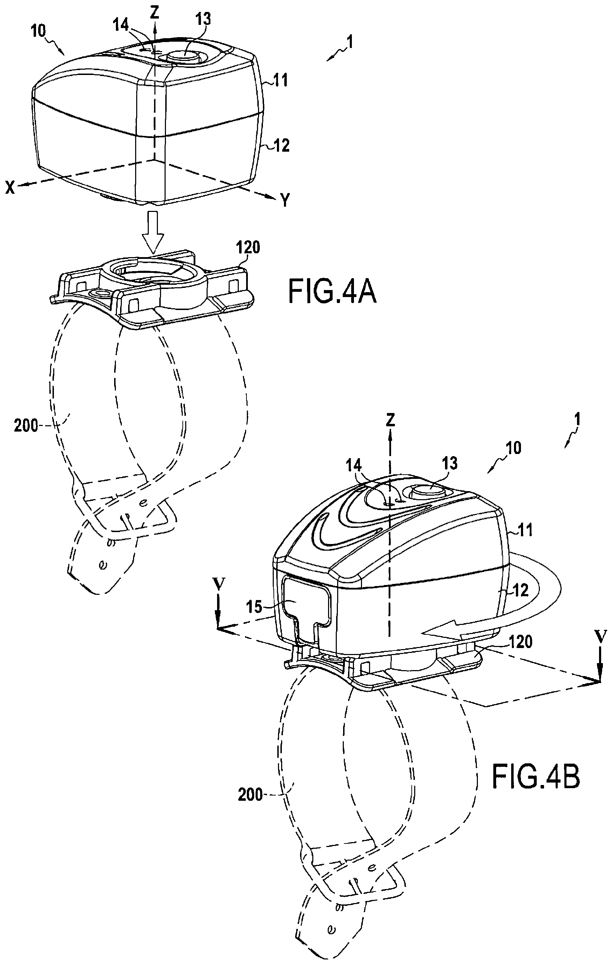

L'accélération mesurée peut être un vecteur à une, deux ou trois composantes. La vitesse angulaire mesurée peut être un vecteur à une, deux ou trois composantes. De préférence, l'accélération mesurée et la vitesse angulaire mesurée sont toutes les deux des vecteurs à trois composantes. De préférence, afin de simplifier les calculs ultérieurs, ces vecteurs à trois composantes sont exprimés dans un repère cartésien XYZ direct fixé au système de mesure 10. Les axes X, Y, Z de ce repère sont illustrés schématiquement sur la figure 4A.

Le système de mesure 10 peut en outre comprendre un magnétomètre 35 est configuré pour mesurer un vecteur champ magnétique local au niveau du système de mesure 10, et/ou un récepteur satellitaire (ci-après « récepteur GNSS ») 36.

« GNSS » est un acronyme anglais signifiant « Global Navigation Satellite System », c'est-à-dire système mondial de navigation par satellite. Le terme « GNSS » englobe ainsi tous les systèmes de positionnement par satellite qui permettent à un utilisateur de connaître sa position, sa vitesse et l'heure à l'aide d'un récepteur recevant un signal radio émis par des satellites, et notamment les systèmes GPS (Global Positioning System), GLONASS et Galileo.

Le récepteur GNSS 36 est ainsi configuré pour recevoir et traiter un signal 56 émis par un premier GNSS, et fournir en sortie une ou plusieurs grandeurs représentatives du signal 56.

Dans certains modes de réalisation, le récepteur GNSS 36 est configuré pour recevoir et traiter des signaux émis par plusieurs GNSS. Dans ce cas, le récepteur GNSS est configuré pour recevoir et traiter un signal 56' émis par un deuxième GNSS, et fournir en sortie une ou plusieurs grandeurs représentatives du signal 56'.

Dans un exemple, le premier GNSS est le système GPS et le deuxième GNSS est le système GLONASS.

Le système de mesure 10 comprend une unité de calcul. L'unité de calcul comprend notamment une carte mère 20 et une mémoire 31. La carte mère 20 comprend notamment, comme cela est bien connu, un processeur (CPU pour « Central Processing Unit » en anglais) et une mémoire vive (RAM pour « Random Access Memory » en anglais). La mémoire 31 est configurée pour stocker un ou plusieurs programmes et/ou des résultats de calculs effectués par le processeur. La mémoire 31 peut être, par exemple, une mémoire flash, par exemple sous la forme d'une carte SD.

L'unité de calcul est configurée pour mettre en oeuvre différentes étapes comme cela sera détaillé plus loin.

Le système de mesure 10 peut comprendre une unité de transmission 40 configurée pour transmettre des données à un système extérieur. L'unité de transmission 40 peut comprendre une carte Ethernet, un connecteur USB, une carte WiFi, ou une combinaison de ces éléments.

Dans l'exemple représenté, l'unité de calcul est installée dans le système de mesure 10, ensemble avec l'accéléromètre 33, le gyromètre 34, le magnétomètre 35 et le récepteur GNSS 36, et l'unité de calcul acquiert directement les mesures réalisées par ces capteurs, par exemple via une interface réseau connue.

En alternative, l'unité de calcul peut être extérieure à ce boîtier. Les mesures peuvent alors être stockées dans la mémoire 31 afin d'être posttraitées par l'unité de calcul, ou encore être transmises à l'unité de calcul via l'unité de transmission 40.

Le dispositif 10 comprend une alimentation électrique 21 pour alimenter en électricité les composants décrits ci-dessus. L'alimentation électrique 21 peut comprendre une batterie et/ou un connecteur configuré pour être raccordé à une source extérieure d'électricité (non représentée).

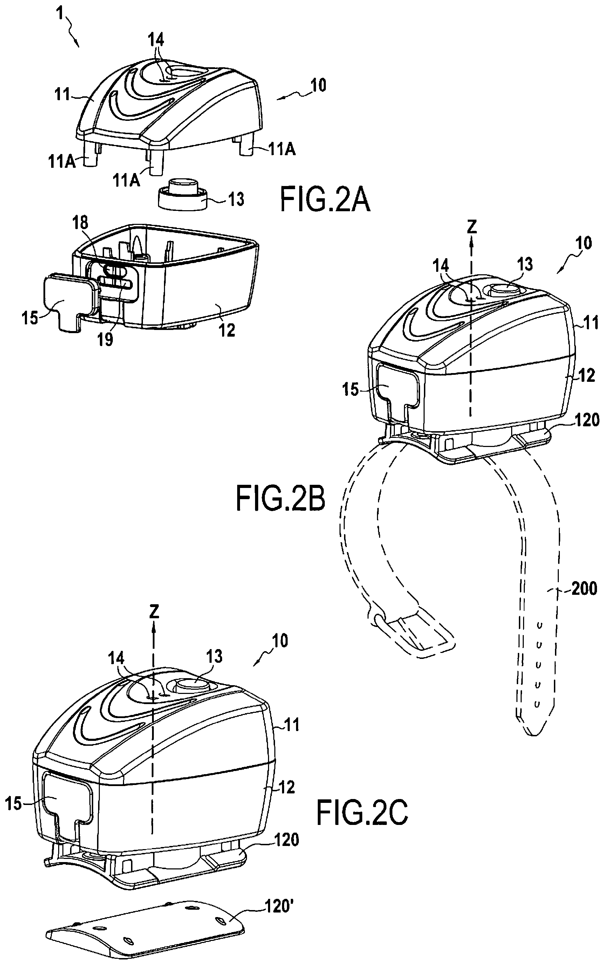

Les figures 2A et 2B constituent une vue éclatée d'un mode de réalisation du système 1.

Comme on peut le voir sur la figure 2A, le système de mesure 10 se présente sous la forme d'un boîtier. Le boîtier contient les éléments représentés sur la figure 1, ces éléments étant omis sur les autres figures afin de ne pas alourdir le dessin. Le boîtier, qui est de préférence étanche, est réalisé ici par assemblage d'une partie supérieure 11 et d'une partie inférieure 12, cet assemblage étant réalisé à l'aide d'ergots 11A. La partie supérieure 11 et la partie inférieure 12 sont de préférence réalisées en une matière plastique appropriée, par exemple par moulage par injection. Le boîtier peut toutefois être assemblé et/ou fabriqué différemment sans sortir du cadre de l'invention.

Un port 18 peut être prévu pour recevoir un connecteur, pour fournir de la puissance électrique à l'alimentation électrique 21 et/ou pour assurer une connexion avec l'unité de transmission 40. Par exemple, le port 18 est un port du type USB ou micro-USB, qui permet avantageusement d'assurer ces deux fonctions simultanément.

Une fente 19 peut être prévue pour permettre d'insérer et de retirer la mémoire 31.

Un bouchon 15, fabriqué par exemple en élastomère, peut être prévu pour obturer, de préférence de façon étanche, le port 18 et/ou la fente 19.

Un bouton marche-arrêt 13 peut être prévu pour permettre à l'utilisateur d'allumer et d'éteindre le système de mesure 10.

Un autre bouton marche-arrêt (non représenté) peut être prévu pour permettre à l'utilisateur de démarrer et d'arrêter l'acquisition de données. En alternative, ce bouton marche-arrêt peut être omis, et le démarrage et l'arrêt de l'acquisition de données peut être commandé à distance via l'unité de transmission 40.

Une ou plusieurs diodes électroluminescentes (LED) 14 peuvent être prévues pour indiquer à l'utilisateur si le système de mesure 10 est allumé ou éteint et/ou si le système de mesure 10 acquiert des données ou non.

Supports

Comme indiqué précédemment, le système 1 comprend une pluralité de supports 120, et le système de mesure 10 est configuré pour être fixé de façon détachable à chaque support 120.

Chaque support 120 est configuré pour permettre de fixer le système de mesure 10 dans une position permettant propice à l'acquisition de données adaptées pour un mode de mouvement. On notera donc qu'il est préférable de prévoir un support 120 par mode de mouvement possible de l'utilisateur.

Selon les modes de mouvement envisagés, le support 120 peut être fixé, par exemple, au pied de l'utilisateur pour le mode de mouvement « course à pied », sur le tableau de bord ou le pare-brise d'un véhicule pour le mode de mouvement « déplacement à bord d'un véhicule automobile », sur le guidon d'un vélo pour le mode de mouvement « déplacement sur une bicyclette », sur une valise pour un mode de mouvement nomade (déplacement en métro, dans une gare, un aéroport, etc.), sur un guidon pour le mode de mouvement « déplacement sur un Segway ® ».

Dans l'exemple représenté sur la figure 2B, le support 120 est fixé sur un bracelet 200 pouvant être porté au poignet par l'utilisateur, le bracelet 200 étant reçu par le support 120. Le support 120 représenté sur la figure 2B est donc compatible avec le mode de mouvement « marche à pied ».

Dans l'exemple représenté sur la figure 2C, une pièce complémentaire 120' est fixée au support 120, par exemple à l'aide de vis (non représentées). La pièce complémentaire 120' peut permettre l'installation du support 120 sur une surface plane ou sensiblement plane, telle que le tableau de bord ou le pare-brise d'un véhicule.

Le support 120, et le cas échéant la pièce complémentaire 120', sont de préférence réalisés en une matière plastique appropriée, par exemple par moulage par injection.

Il est rappelé qu'un seul des supports 120 est représenté sur les figures. Dans la suite, sauf là où le contexte l'exigera, on écrira « le support 120 » pour décrire ensemble tous les supports 120.

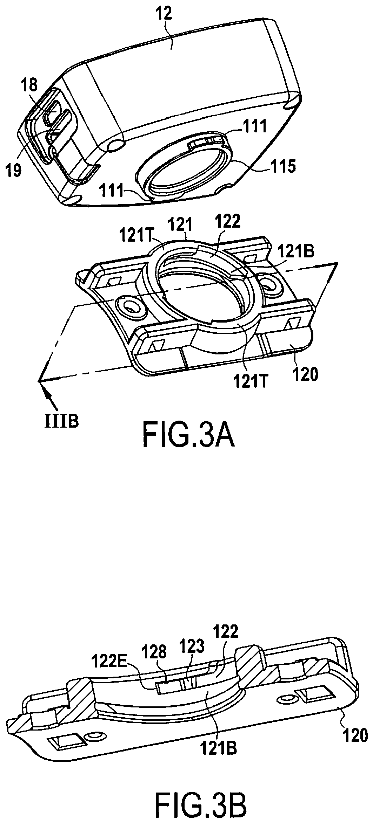

Le support 120 comprend un élément de guidage, et le système de mesure 10 comprend un élément de coopération apte à coopérer avec l'élément de guidage. Les figures 3A et 3B représentent plus en détail ces éléments selon le mode de réalisation.

Comme on le voit sur la figure 3A, le système de mesure 10 (ici, la partie inférieure 12 du boîtier) présente une collerette 115. La collerette 115 est de préférence réalisée d'un seul tenant avec le système de mesure 10, par exemple lors du moulage par injection de la partie inférieure 12 du boîtier. La collerette 115 présente au moins un (deux, sur la figure 3A) élément de coopération, ici sous la forme d'un ergot 111.

Comme on le voit sur les figures 3A et 3B, le support 120 présente une portion cylindrique 121 apte à recevoir la collerette 115. Pour cela, la portion cylindrique 121 présente au moins une portion en arc de cercle 121B en saillie correspondant chacune à un ergot 111. Une autre portion en arc de cercle 121T en saillie recouvre une partie de la portion en arc de cercle 121B. La portion cylindrique 121, la portion en arc de cercle 121B et la portion en arc de cercle 121T définissent donc ensemble un élément de guidage, ici sous la forme d'une rainure 122, avec laquelle l'ergot 111 est apte à coopérer.

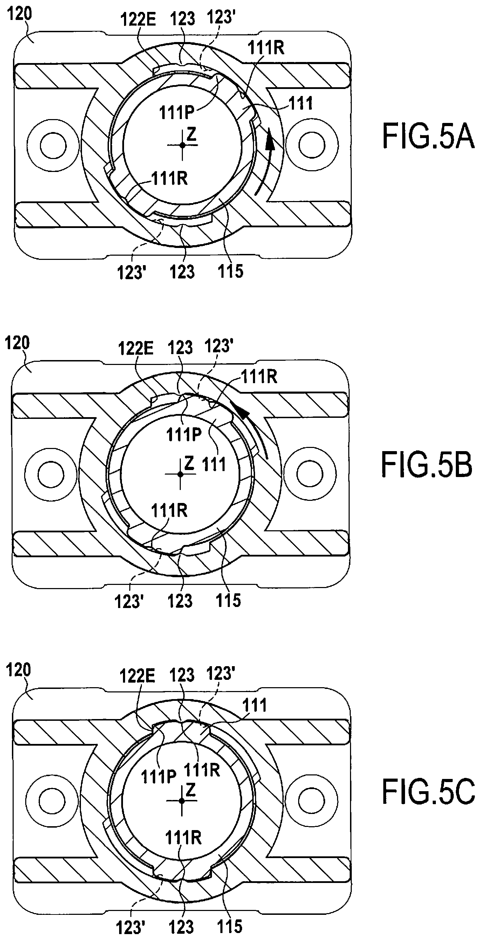

Lorsque l'utilisateur souhaite fixer le système de mesure 10 au support 120, il aligne tout d'abord les axes de la collerette 115 et de la partie cylindrique 121 comme représenté sur la figure 4A, puis rapproche la collerette 115 et la partie cylindrique 121, jusqu'à ce que l'ergot 111 vienne en contact avec la portion en arc de cercle en saillie 121B. Ensuite, comme représenté sur la figure 4B et les figures 5A à 5C, il fait tourner le système de mesure 10 autour des axes de la collerette 115 et de la partie cylindrique 121, jusqu'à ce que l'ergot 111 atteigne une butée 122E située à l'extrémité de la rainure 122, sous la portion en arc de cercle en saillie 121T.

On comprend donc que la rainure 122 définit la rotation qu'effectue le système de mesure 10 par rapport au support 120 lorsque le système de mesure 10 est en train d'être fixé au support 120.

On notera en outre que la portion en arc de cercle 121T, en retenant l'ergot 111, contribue à maintenir le système de mesure 10 en place sur le support 120. Un doigt d'appui 128, de préférence réalisé en matière plastique et d'un seul tenant avec le support 120, peut être prévu sur la portion en arc de cercle 121T et faisant face à l'ergot 111, afin de davantage maintenir le système de mesure 10 en place sur le support 120.

Lorsque l'utilisateur souhaite détacher le système de mesure 10 du support 120, il lui suffit de faire tourner le système de mesure 10 du support 120 dans le sens inverse de celui de la figure 4B, jusqu'à ce que l'ergot 111 soit libéré de la portion en arc de cercle 121T, puis de tirer le système de mesure 10.

On notera que l'élément de coopération et l'élément de guidage ne sont nullement limités à l'exemple qui vient d'être décrit, et peuvent être modifiés de diverses manières sans pour autant sortir du cadre de l'invention. Notamment, bien que les figures représentent deux ergots 111 disposés symétriquement par rapport à l'axe de la collerette 115, il est possible de ne prévoir qu'un seul ergot 111, ou bien deux ergots 111 disposés symétriquement par rapport à l'axe de la collerette 115, ou bien trois ou plus ergots 111. De façon plus générale, il est envisagé que la fixation du système de mesure 10 au support 120 puisse être réalisée de diverses manières, pourvu que cette fixation soit détachable et que le mouvement associé à cette fixation soit défini au moins en partie par l'élément de guidage, et de préférence comprenne une rotation du système de mesure 10 par rapport au support 120, la rotation étant définie par l'élément de guidage.

Les figures 5A à 5C représentent différentes phases du mouvement de rotation qu'effectue le système de mesure 10 par rapport au support 120 lors de sa fixation au support 120.

Sur la figure 5A, l'ergot 111 vient de venir en contact avec la portion en arc de cercle 121B en saillie, et l'utilisateur commence la rotation du système de mesure 10 vers la butée 122E. Il en résulte une variation de la vitesse angulaire mesurée par le gyromètre 34 du système de mesure 10.

Comme on peut le voir sur les figures 3B et 5A à 5C, la partie cylindrique 121 présente un relief avec lequel l'ergot 111 est susceptible de venir en contact, ici sous la forme d'un cran 123. La figure 5B représente la venue en contact de l'ergot 111 avec le cran 123. Du fait de la force exercée par le cran 123 sur l'ergot 111 au niveau de son extrémité 111P, cette venue en contact provoque une variation de l'accélération mesurée par l'accéléromètre 33 du système de mesure 10. Sur la figure 5C, l'extrémité 111P de l'ergot 111 a dépassé le cran 123, d'où il résulte une autre variation de l'accélération mesurée par l'accéléromètre 33 du système de mesure 10. Lorsque l'extrémité 111P atteint la butée 122E, la rotation du système de mesure 10 par rapport au support 120 n'est plus possible, d'où il résulte une autre variation de la vitesse angulaire mesurée par le gyromètre 34 du système de mesure 10.

Jusqu'ici, on n'a décrit que la venue en contact de l'ergot 111 avec un seul relief prévu sur le support 120. Toutefois, le support 120 présente un ensemble de reliefs, c'est-à-dire une pluralité de reliefs avec lequel l'ergot 111 vient successivement en contact. Ainsi, sur les figures 5A à 5C, on a représenté en pointillés un relief supplémentaire, sous la forme d'un cran supplémentaire 123' distinct du cran 123. L'interaction de l'ergot 111 avec ce cran supplémentaire 123' est identique à ce qui a été décrit en rapport avec le cran 123, et n'est donc pas décrite en détail à nouveau. Bien entendu, tout nombre approprié de reliefs peut être prévu sur le support 120 selon les circonstances et notamment selon le nombre de modes de mouvement possibles.

Comme cela sera détaillé plus loin en rapport avec les figures 6A à 6D, chaque support 120 de la pluralité de supports 120 comprend un ensemble de reliefs qui est différent pour chaque support 120.

Dans l'exemple représenté sur les figures, l'ergot 111 présente un évidement 111R, dans lequel le dernier cran 123 avec lequel l'ergot 111 est venu en contact est reçu, ce qui contribue à maintenir en place l'ergot 111 et donc le système de mesure 10. L'évidement 111R n'est toutefois pas obligatoire, et l'ergot 111 peut aussi être formé de telle sorte que son extrémité opposée à l'extrémité 111P soit en contact avec le cran 123 dans la position représentée sur la figure 5C.

Par ailleurs, bien que les reliefs décrits jusqu'ici se présentent sous la forme de crans 123, 123' en saillie par rapport au support 120, ils peuvent aussi se présenter sous la forme d'évidements pratiqués dans le support 120, auquel cas l'élément de coopération porté par le système de mesure 10 comprend une portion en saillie apte à venir coopérer avec ces évidements.

Fonctionnement du dispositif

On va maintenant détailler le fonctionnement du dispositif.

L'accéléromètre 33 et le gyromètre 34 mesurent respectivement l'accélération et la vitesse angulaire du système de mesure 10. De préférence, les mesures de l'accéléromètre 33 et du gyromètre 34 sont effectuées à une même fréquence fixe $f_{IMU}$. Cette fréquence est typiquement élevée, au moins égale à 100 Hz, et par exemple égale à 200 Hz. De préférence, les mesures fournies par l'accéléromètre 33 et le gyromètre 34 sont horodatées à l'aide d'un temps fourni par le récepteur GNSS 36. Par exemple, ces mesures sont horodatées en temps GPS « Time of Week ».

Comme évoqué ci-dessus, il est préférable que l'accélération et la vitesse angulaire soient mesurées dans le repère cartésien direct XYZ fixé au système de mesure 10. Il est encore plus préférable que, comme on peut le voir sur les figures 4A, 4B et 5A à 5C, l'un des axes Z du repère XYZ coïncide avec l'axe de la rotation du système de mesure 10 par rapport au support 120. Ceci peut être obtenu en positionnant de manière adéquate l'accéléromètre 33 et le gyromètre 34 par rapport au système de mesure 10. De cette manière, ce sont principalement les composantes de l'accélération suivant les axes X et Y et la composante suivant l'axe Z de la vitesse angulaire qui sont pertinentes pour détecter la fixation du système de mesure 10 au support 120, la composante de l'accélération suivant l'axe Z et les composantes de la vitesse angulaire suivant les axes X et Y étant faiblement pertinentes et pouvant même être négligées. Ceci simplifie les calculs nécessaires à l'étape de détection et à l'étape de sélection décrites ci-après.

Comme évoqué ci-dessus, l'unité de calcul est configurée pour mettre en oeuvre une détermination d'une trajectoire de l'utilisateur. Cette détermination est réalisée par exemple au cours de l'exécution, par le processeur, d'un programme stocké dans la mémoire 31.

La détermination mise en oeuvre par l'unité de calcul comprend :

- une sélection d'un algorithme de détermination de trajectoire, comprenant une acquisition de données, une étape de détection, et une étape de sélection ; et
- une étape de détermination de trajectoire à l'aide de l'algorithme de détermination de trajectoire ainsi sélectionné.

*Acquisition de données*

L'acquisition de données comprend le fait d'acquérir les données mesurées par les capteurs présents dans le système de mesure 10, lesquelles comprennent l'accélération mesurée par l'accéléromètre 33 et le gyromètre 34. Comme évoqué ci-dessus, l'unité de calcul peut être installée dans le système de mesure 10, auquel cas l'unité de calcul peut acquérir directement les mesures réalisées par les capteurs du système de mesure 10, par exemple via une interface réseau connue. En alternative, l'unité de calcul peut être installée à l'extérieur du système de mesure 10, auquel cas l'unité de calcul peut acquérir les données en lisant la mémoire 31, ou encore via l'unité de transmission 40.

*Étape de détection*

L'étape de détection comprend le fait de détecter si l'utilisateur se déplace selon un nouveau mode de mouvement distinct d'un mode de mouvement actuel. Autrement dit, l'étape de détection comprend le fait de détecter si l'utilisateur se déplace selon un deuxième mode de mouvement qui est distinct d'un premier mode de mouvement dans lequel il se déplaçait jusqu'ici. De façon équivalente, on peut dire que l'étape de détection comprend le fait de détecter si l'utilisateur a changé de mode de mouvement.

Pour cela, à partir de l'accélération et de la vitesse angulaire acquises du système de mesure 10, l'unité de calcul détecte le mouvement associé à la fixation du système de mesure 10 sur le support 120, ce mouvement comprenant la rotation du système de mesure 10 par rapport au support 120 qui a été décrite ci-dessus, et détecte la venue en contact, durant cette rotation, de l'élément de coopération avec l'ensemble de reliefs.

La figure 6A représente schématiquement, à titre d'explication, les variations en fonction du temps de l'accélération et de la vitesse angulaire du système de mesure 10, lors de sa fixation sur le support 120. Dans l'exemple retenu, le support 120 présente quatre reliefs avec lequel l'élément de coopération vient successivement en contact, et les composantes de l'accélération suivant les axes X et Y et la composante de la vitesse angulaire suivant l'axe Z sont retenues pour détecter la fixation du système de mesure 10 au support 120. La composante de l'accélération suivant l'axe X est notée $a_X$, la composante de l'accélération suivant l'axe Y est notée $a_Y$, et la composante de l'accélération suivant l'axe Z est notée $a_Z$. La composante de la vitesse angulaire suivant l'axe Z est notée $\omega_Z$. La norme de l'accélération dans le plan XY est notée $a_{XY}$ (on a ainsi

$$a_{XY} = \sqrt{a_X^2 + a_Y^2}$$).

On notera que les échelles retenues pour $a_{XY}$ et pour $\omega_Z$ sont arbitraires, et en particulier ne reflètent pas nécessairement leur signe algébrique (positif ou négatif).

Dans la phase initiale de la rotation (figure 5A), le système de mesure 10 est mis en rotation par l'utilisateur, et donc $\omega_Z$ augmente (partie la plus à gauche du graphe de la figure 6A). Lorsque l'élément de coopération vient en contact avec un premier relief (figure 5B), $a_{XY}$ varie jusqu'à atteindre un extrémum local (ici un minimum), puis varie de nouveau en s'éloignant de cet extrémum local (première région entourée d'une ellipse et marquée d'un « 1 » sur le graphe de la figure 6A). Ces variations de $a_{XY}$ se répètent (quatre régions entourées d'une ellipse et marquées d'un « 1 » sur le graphe de la figure 6A), jusqu'à ce que l'élément de coopération ait dépassé tous les reliefs du support. Pendant cette période, $\omega_Z$ reste sensiblement constante puisque l'utilisateur continue à faire tourner le système de mesure 10 par rapport au support 120. Enfin, lorsque le système de mesure 10 ne peut plus tourner (figure 5C), $\omega_Z$ diminue, éventuellement jusqu'à devenir sensiblement égale à zéro.

Dans le présent exposé, « A est sensiblement égal à B » signifie que A est égal à B plus ou moins une certaine marge déterminée à l'avance. Cette marge peut notamment tenir compte du bruit du capteur utilisé pour mesurer B et/ou inclure une certaine tolérance. La marge peut être fixée arbitrairement à l'avance, ou bien être calibrée lors d'essais préalables. Sans vouloir limiter la portée du présent exposé, la marge peut être, par exemple, de 5%, 10% ou 20%.

Dans le présent exposé, « A est sensiblement constant » signifie que les différentes valeurs que prend A au cours du temps sont sensiblement égales entre elles. Ces différentes valeurs peuvent être acquises sur une fenêtre glissante. La durée de la fenêtre glissante peut être fixée arbitrairement à l'avance, ou bien être calibrée lors d'essais préalables. Sans vouloir limiter la portée du présent exposé, la durée de la fenêtre glissante peut être de 100 ms, 200 ms ou 500 ms.

Ainsi, dans l'exemple représenté, l'étape de détection comprend le fait de détecter un mouvement comprenant la rotation du système de mesure 10 à partir de la variation de la vitesse angulaire $\omega_Z$ et d'au moins une parmi les accélérations $a_X$, $a_Y$ et $a_Z$.

On notera que, au sens du présent exposé, « détecter A à partir de B » n'exclut pas que d'autres grandeurs que B soient utilisées pour détecter A.

Une détection possible du mouvement est décrite ci-après, à titre d'exemple non limitatif.

On détecte tout d'abord la mise en contact du système de mesure 10 avec le support 120. Cette mise en contact peut être détectée à partir de l'accélération $a_Z$. Par exemple, la détection de cette mise en contact comprend le fait de détecter un extrémum local de $a_Z$, et de vérifier si la valeur absolue de cet extrémum local est supérieure à une valeur prédéterminée stockée à l'avance.

Ensuite, on détecte la rotation du système de mesure 10 par rapport au support 120, à partir de la vitesse angulaire $\omega_Z$. Par exemple, la détection de cette rotation comprend le fait de détecter que la valeur absolue de la vitesse angulaire $\omega_Z$ dépasse une valeur prédéterminée stockée à l'avance et reste supérieure à cette valeur prédéterminée et/ou reste sensiblement constante.

On détecte la venue en contact, pendant cette rotation, de l'élément de coopération avec l'ensemble de reliefs. Par exemple, la détection de cette venue en contact comprend le fait de détecter une pluralité d'extréma locaux de $a_{XY}$.

On détecte enfin l'arrêt de la rotation du système de mesure 10 par rapport au support 120. Par exemple, la détection de l'arrêt de la rotation comprend le fait de détecter que la valeur absolue de la vitesse angulaire $\omega_Z$ devient inférieure à une valeur prédéterminée stockée à l'avance et reste inférieure à cette valeur prédéterminée.

On notera que la détection de la mise en contact du système de mesure 10 avec le support 120 est optionnelle et peut être omise.

*Étape de sélection*

L'étape de sélection comprend le fait de sélectionner l'algorithme de détermination de trajectoire en fonction de l'ensemble de reliefs avec lequel l'élément de coopération est venu en contact. Cette sélection s'effectue à partir de l'accélération et de la vitesse angulaire acquises pendant la rotation détectée dans l'étape de détection.

Comme on l'a déjà évoqué ci-dessus, chaque support 120 de la pluralité de supports 120 comprend un ensemble de reliefs qui est différent pour chaque support 120.

Les figures 6A à 6D montrent un exemple de mise en oeuvre de ces ensembles de reliefs.

Sur le support 120 correspondant à la figure 6A déjà décrite, l'ensemble de reliefs comprend quatre reliefs disposés à quatre emplacements espacés régulièrement.

Sur les supports 120 correspondant aux figures 6B à 6D, l'ensemble de reliefs comprend, aux mêmes quatre emplacements, deux ou trois reliefs.

On comprend donc que la présence ou l'absence de reliefs aux quatre emplacements définit un code binaire offrant $2^4 = 16$ possibilités.

Dans cet exemple, l'étape de sélection comprend donc le fait de détecter la présence ou l'absence de reliefs à chacun des quatre emplacements, la présence d'un relief correspondant à un « 1 » binaire, et l'absence d'un relief correspondant à un « 0 » binaire. Dans un exemple, cette détection est effectuée à partir des extréma locaux de $a_{XY}$ détectés dans l'étape de détection.

À partir du résultat de cette détection, on en déduit un mot binaire à quatre bits, qui est ensuite converti en base 10. Ainsi, par exemple, sur la figure 6A, quatre reliefs sont détectés : le mot binaire déduit est 1111 (bin) = 15 (dec). De même, sur les figures 6B à 6D, les mots binaires déduits sont respectivement 1011 (bin) = 11 (dec), 0011 (bin) = 3 (dec), et 0101 (bin) = 5 (dec).

Une table établie à l'avance, et qui peut par exemple être stockée dans la mémoire 31, associe un mode de mouvement à chaque mot binaire converti en base 10. En consultant cette table, l'unité de calcul détecte le nouveau mode de mouvement, puis sélectionne un algorithme de détermination de trajectoire associé à ce nouveau mode de mouvement.

On notera que ce qui précède peut être aisément généralisé à un nombre quelconque N d'emplacements, le code binaire offrant ainsi $2^N$ possibilités.

On notera également que plusieurs mots binaires peuvent être associés à un même mode de mouvement.

On notera également que la conversion du mot binaire en base 10 peut être omise.

On notera également que le code binaire peut être défini par l'ensemble de reliefs d'une autre manière que par la présence ou l'absence d'un relief.

En outre, l'ensemble des reliefs peut également définir un code ternaire. Pour cela, par exemple, chaque relief peut être choisi parmi deux reliefs présentant deux dimensions différentes. On comprend donc que l'absence de relief, la présence d'un relief d'une première dimension et la présence d'un relief d'une deuxième dimension à N emplacements définit un code ternaire offrant $3^N$ possibilités.

Dans encore un autre exemple (non représenté sur les figures), l'étape de sélection comprend le fait de détecter le nombre de reliefs avec lesquels l'élément de coopération est venu en contact pendant la rotation du système de mesure 10. Dans un exemple, cette détection comprend le fait de : détecter une pluralité de maxima locaux de $a_{XY}$ ; incrémenter un compteur à chaque fois qu'un maximum local est détecté, et lire la valeur du compteur après que l'arrêt de la rotation du système de mesure 10 par rapport au support 120 a été détecté, la valeur du compteur étant alors le nombre de reliefs.

On comprend que le nombre de reliefs offre N possibilités, N étant le nombre d'emplacements.

*Étape de détermination de trajectoire*

L'étape de détermination comprend le fait de déterminer la trajectoire de l'utilisateur, en appliquant l'algorithme de détermination sélectionné dans l'étape de sélection aux données acquises après la sélection. Par exemple, pour le mode de déplacement « marche à pied », l'algorithme de détermination de trajectoire peut être un algorithme connu du type navigation à l'estime pour piéton (« Pedestrian Dead Reckoning » (PDR) en anglais).

*Étape de transmission*

En outre, la détermination mise en oeuvre par l'unité de calcul peut comprendre une étape de transmission. L'étape de transmission comprend le fait de transmettre la trajectoire déterminée pendant l'étape de détermination de trajectoire, par exemple via l'unité de transmission 40. La trajectoire déterminée peut être transmise après la fin de l'étape de détermination de trajectoire, ou bien pendant cette étape, au fur et à mesure de la détermination de trajectoire.

La trajectoire déterminée peut ainsi être transmise à un dispositif extérieur, en vue d'être affichée à l'utilisateur (par exemple sur un téléphone intelligent ou un autre appareil) ou bien en vue d'être analysée et/ou comparée avec la trajectoire réelle.

Quoique la présente invention ait été décrite en se référant à des exemples de réalisation spécifiques, il est évident que des modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

**Revendications**

1. Procédé de sélection d'un algorithme de détermination de trajectoire associé à un mode de mouvement d'un utilisateur susceptible de se mouvoir selon plusieurs modes de mouvement, comprenant :

   l'acquisition de données comprenant une accélération ($a_{XY}$) et une vitesse angulaire ($\omega_Z$) d'un système de mesure (10) ;
   une étape de détection comprenant le fait de détecter si l'utilisateur change de mode de mouvement, et se déplace ainsi selon un nouveau mode de mouvement distinct d'un mode de mouvement dans lequel l'utilisateur se déplaçait jusqu'ici ; et

une étape de sélection comprenant le fait de sélectionner, dans le cas où il a été détecté dans l'étape de détection que l'utilisateur a changé de mode de mouvement et se déplace selon le nouveau mode de mouvement, un algorithme de détermination de trajectoire associé au nouveau mode de mouvement ; et

**caractérisé en ce que**

le système de mesure (10) est configuré pour être fixé de façon détachable à une pluralité de supports (120), et comprend un élément de coopération (111) apte à coopérer avec un élément de guidage (122) prévu sur chaque support de ladite pluralité de supports (120), et

l'étape de détection comprend le fait de détecter, à partir de l'accélération ($a_{XY}$) et de la vitesse angulaire ($\omega_Z$) acquises du système de mesure (10), un mouvement associé à la fixation du système de mesure (10) sur un support (120), le mouvement étant défini au moins en partie par l'élément de guidage (122).

2. Procédé selon la revendication 1, dans lequel le mouvement comprend une rotation du système de mesure par rapport au support, ladite rotation étant définie par l'élément de guidage (122).

3. Procédé selon la revendication 1 ou 2, dans lequel

chaque élément de guidage (122) de chaque support de ladite pluralité de supports comprend un ensemble de reliefs (123, 123') qui est différent pour chaque support,

l'étape de détection comprend le fait de détecter la venue en contact, durant ledit mouvement, de l'élément de coopération (111) avec l'ensemble de reliefs (123, 123'), et

l'étape de sélection comprend le fait de sélectionner l'algorithme de détermination de trajectoire en fonction de l'ensemble de reliefs (123, 123') avec lequel l'élément de coopération est venu en contact.

4. Procédé de détermination d'une trajectoire d'un utilisateur susceptible de se mouvoir selon plusieurs modes de mouvement, comprenant :

la sélection, à l'aide du procédé selon l'une quelconque des revendications 1 à 3 d'un algorithme de détermination de trajectoire associé à un nouveau mode de mouvement de l'utilisateur ; et

une étape de détermination de trajectoire comprenant le fait d'appliquer l'algorithme de détermination de trajectoire ainsi sélectionné aux données acquises après ladite sélection.

5. Procédé de détermination d'une trajectoire d'un utilisateur selon la revendication 4, comprenant en outre une étape de transmission comprenant le fait de transmettre la trajectoire déterminée pendant l'étape de détermination de trajectoire à un dispositif extérieur.

6. Programme comportant des instructions pour l'exécution du procédé selon l'une quelconque des revendications 1 à 5 lorsque ledit programme est exécuté par un ordinateur.

7. Support d'enregistrement lisible par ordinateur sur lequel est enregistré un programme d'ordinateur comportant des instructions pour l'exécution du procédé selon l'une quelconque des revendications 1 à 5.

8. Dispositif de détermination d'une trajectoire d'un utilisateur susceptible de se mouvoir selon plusieurs modes de mouvement, le dispositif comprenant :

un système de mesure (10) comprenant un accéléromètre (33) et un gyromètre (34) ; et
une unité de calcul configurée pour mettre en oeuvre :

une étape de détection comprenant le fait de détecter si l'utilisateur change de mode de mouvement, et se déplace ainsi selon un nouveau mode de mouvement distinct d'un mode de mouvement dans lequel l'utilisateur se déplaçait jusqu'ici ;

une étape de sélection comprenant le fait de sélectionner, dans le cas où il a été détecté dans l'étape de détection que l'utilisateur a changé de mode de mouvement et se déplace selon le nouveau mode de mouvement, un algorithme de détermination de trajectoire associé au nouveau mode de mouvement ; et

une étape de détermination de trajectoire comprenant le fait d'appliquer l'algorithme de détermination sélectionné dans l'étape de sélection aux données acquises ;

**caractérisé en ce que**

le système de mesure (10) est configuré pour être fixé de façon détachable à une pluralité de supports (120), et comprend un élément de coopération (111) apte à coopérer avec un élément de guidage (122) prévu sur chaque support de ladite pluralité de supports,

l'étape de détection comprend le fait de détecter, à partir de l'accélération ($\mathbf{a}_{XY}$) et de la vitesse angulaire ($\omega_Z$) mesurées par l'accéléromètre (33) et le gyromètre (34), un mouvement associé à la fixation du système de mesure (10) sur un support (120), le mouvement étant défini au moins en partie par l'élément de guidage (122).

9. Dispositif selon la revendication 8, dans lequel le mouvement comprend une rotation du système de mesure (10) par rapport au support (120), ladite rotation étant définie par l'élément de guidage (122).

10. Dispositif selon la revendication 8 ou 9, dans lequel

chaque élément de guidage (122) de chaque support de ladite pluralité de supports comprend un ensemble de reliefs (123, 123') qui est différent pour chaque support (120),

l'étape de détection comprend le fait de détecter la venue en contact, durant ledit mouvement, de l'élément de coopération avec l'ensemble de reliefs (123, 123'), et

l'étape de sélection comprend le fait de sélectionner l'algorithme de détermination de trajectoire en fonction de l'ensemble de reliefs (123, 123') avec lequel l'élément de coopération (111) est venu en contact.

11. Système (1) de détermination d'une trajectoire d'un utilisateur susceptible de se mouvoir selon plusieurs modes de mouvement, comprenant :

le dispositif selon l'une quelconque des revendications 8 à 10 ; et

une pluralité de supports (120), l'élément de coopération (111) étant apte à coopérer avec un élément de guidage (122) prévu sur chaque support de ladite pluralité de supports (120).

12. Système selon la revendication 11, dans lequel chaque élément de guidage (122) de chaque support de ladite pluralité de supports (120) comprend un ensemble de reliefs (123, 123') qui est différent pour chaque support (120).

**Patentansprüche**

1. Verfahren zur Auswahl eines Pfadbestimmungsalgorithmus, die mit einem Bewegungsmodus, der mit einem Bewegungsmodus eines Nutzers assoziiert ist, der in der Lage ist, sich in mehreren Bewegungsmodi zu bewegen, umfassend:

Erfassen von Daten, umfassend eine Beschleunigung ($a_{XY}$) und eine Winkelgeschwindigkeit ($\omega_Z$) eines Messsystems (10);

einen Erfassungsschritt, umfassend den Umstand, zu erfassen, wenn der Nutzer seinen Bewegungsmodus ändert und sich dadurch in einem neuen Bewegungsmodus bewegt, der sich von einem Bewegungsmodus unterscheidet, in dem sich der Nutzer bisher bewegt hat; und

einen Auswahlschritt, umfassend den Umstand, für den Fall, dass in dem Erfassungsschritt erfasst wurde, dass der Nutzer seinen Bewegungsmodus geändert hat und sich gemäß dem neuen Bewegungsmodus bewegt, einen Pfadbestimmungsalgorithmus auszuwählen, der mit dem neuen Bewegungsmodus assoziiert ist; und

**dadurch gekennzeichnet, dass**
das Messsystem (10) konfiguriert ist, um lösbar an einer Vielzahl von Halterungen (120) befestigt zu werden, und ein Kooperationselement (111) umfasst, das geeignet ist, um mit einem Führungselement (122) zusammenzuwirken, das an jeder der Vielzahl von Halterungen (120) bereitgestellt ist, und
der Erfassungsschritt den Umstand umfasst, anhand der erfassten Beschleunigung ($a_{XY}$) und Winkelgeschwindigkeit ($\omega_Z$), die von dem Messsystem (10) aufgenommen werden, eine Bewegung zu erfassen, die mit der Befestigung des Messsystems (10) an einer Halterung (120) assoziiert ist, wobei die Bewegung zumindest teilweise durch das Führungselement (122) definiert ist.

2. Verfahren nach Anspruch 1, wobei die Bewegung eine Drehung des Messsystems in Bezug auf die Halterung umfasst, wobei die Drehung durch das Führungselement (122) definiert ist.

3. Verfahren nach Anspruch 1 oder 2, wobei

jedes Führungselement (122) von jeder Halterung der Vielzahl von Halterungen eine Reliefanordnung (123, 123') umfasst, die für jede Halterung verschieden ist,

der Erfassungsschritt den Umstand umfasst, das Inkontaktkommen des zusammenwirkenden Elements (111) mit der Reliefanordnung (123, 123') während der Bewegung zu erfassen, und

der Auswahlschritt den Umstand umfasst, den Pfadbestimmungsalgorithmus basierend auf der Reliefanordnung (123, 123') zu erfassen, mit denen das zusammenwirkende Element in Kontakt gekommen ist.

4. Verfahren zur Bestimmung eines Pfads eines Nutzers, der sich gemäß mehreren Bewegungsmodi bewegen kann, umfassend:

Auswählen, mittels des Verfahrens nach einem der Ansprüche 1 bis 3, eines Pfadbestimmungsalgorithmus, der mit einem neuen Bewegungsmodus des Nutzers assoziiert ist; und einen Pfadbestimmungsschritt, umfassend den Umstand, den somit ausgewählten Pfadbestimmungsalgorithmus auf die Daten anzuwenden, die nach der Auswahl aufgenommen werden.

**5.** Verfahren zur Bestimmung eines Pfads eines Nutzers nach Anspruch 4, ferner umfassend einen Übertragungsschritt, umfassend den Umstand, den während des Pfadbestimmungsschritts bestimmten Pfad an eine externe Vorrichtung zu übertragen.

**6.** Programm, umfassend Anweisungen zum Ausführen des Verfahrens nach einem der Ansprüche 1 bis 5, wenn das Programm von einem Computer ausgeführt wird.

**7.** Computerlesbares Aufzeichnungsmedium, auf dem ein Computerprogramm, umfassend Anweisungen zum Ausführen des Verfahrens nach einem der Ansprüche 1 bis 5 aufgezeichnet ist.

**8.** Vorrichtung zur Bestimmung eines Pfads eines Nutzers, der sich gemäß mehreren Bewegungsmodi bewegen kann, die Vorrichtung umfassend:

ein Messsystem (10), umfassend einen Beschleunigungsmesser (33) und ein Gyrometer (34); und
eine Recheneinheit, die konfiguriert ist, um Folgendes zu implementieren:

einen Erfassungsschritt, umfassend den Umstand, zu erfassen, wenn der Nutzer seinen Bewegungsmodus ändert und sich dadurch in einem neuen Bewegungsmodus bewegt, der sich von einem Bewegungsmodus unterscheidet, in dem sich der Nutzer bisher bewegt hat;
einen Auswahlschritt, umfassend den Umstand, für den Fall, dass in dem Erfassungsschritt erfasst wurde, dass der Nutzer seinen Bewegungsmodus geändert hat und sich gemäß dem neuen Bewegungsmodus bewegt, einen Pfadbestimmungsalgorithmus auszuwählen, der mit dem neuen Bewegungsmodus assoziiert ist; und
einen Pfadbestimmungsschritt, umfassend den Umstand, dass der Bestimmungsalgorithmus, der in dem Auswahlschritt ausgewählt wird, auf aufgenommene Daten angewandt wird;
**dadurch gekennzeichnet, dass**
das Messsystem (10) konfiguriert ist, um lösbar an einer Vielzahl von Halterungen (120) befestigt zu werden, und ein Kooperationselement (111) umfasst, das geeignet ist, um mit einem Führungselement (122) zusammenzuwirken, das an jeder der Vielzahl von Halterungen bereitgestellt ist,
der Erfassungsschritt dem Umstand umfasst, anhand der Beschleunigung ($a_{xy}$) und der Winkelgeschwindigkeit ($\omega_Z$), die von dem Beschleunigungsmesser (33) und dem Gyrometer (34) gemessen werden, eine Bewegung zu erfassen, die mit der Befestigung des Messsystems (10) an einer Halterung (120) assoziiert ist, wobei die Bewegung zumindest teilweise durch das Führungselement (122) definiert ist.

**9.** Vorrichtung nach Anspruch 8, wobei die Bewegung eine Drehung des Messsystems (10) in Bezug auf die Halterung (120) umfasst, wobei die Drehung durch das Führungselement (122) definiert ist.

**10.** Vorrichtung nach Anspruch 8 oder 9, wobei

jedes Führungselement (122) von jeder Halterung der Vielzahl von Halterungen eine Reliefanordnung (123, 123') umfasst, die für jede Halterung (120) verschieden ist,
der Erfassungsschritt den Umstand umfasst, das Inkontaktkommen des zusammenwirkenden Elements mit der Reliefanordnung (123, 123') während der Bewegung zu erfassen, und
der Auswahlschritt den Umstand umfasst, den Pfadbestimmungsalgorithmus basierend auf der Reliefanordnung (123, 123') zu erfassen, mit denen das zusammenwirkende Element (111) in Kontakt gekommen ist.

**11.** System (1) zur Bestimmung eines Pfads eines Nutzers, der sich gemäß mehreren Bewegungsmodi bewegen kann, umfassend:

die Vorrichtung nach einem der Ansprüche 8 bis 10; und
eine Vielzahl von Halterungen (120), wobei das zusammenwirkende Element (111) geeignet ist, mit einem Führungselement (122) zusammenzuwirken, das an jeder Halterung der Vielzahl von Halterungen (120) bereitgestellt ist.

**12.** System nach Anspruch 11, wobei jedes Führungselement (122) von jeder Halterung der Vielzahl von Halterungen (120) eine Reliefanordnung (123, 123') umfasst, die für jede Halterung (120) verschieden ist.

**Claims**

**1.** A method of selecting a path-determination algorithm associated with a movement mode of a user capable of moving in a plurality of movement modes, comprising:

acquiring data comprising an acceleration ($\mathbf{a}_{xy}$) and an angular velocity ($\omega_Z$) of a measurement system (10);

a detection step comprising detecting whether the user changes movement modes, and is thus moving in a new movement mode distinct from a movement mode in which the user was moving until then; and

a selection step comprising selecting, in the case where it was detected in the detection step that the user changed movement modes and is moving in the new movement mode, a path-determination algorithm associated with the new movement mode; and

**characterized in that**

the measurement system (10) is configured to be detachably attached to a plurality of supports (120), and comprises a cooperation element (111) able to cooperate with a guide element (122) provided on each support of said plurality of supports (120), and

the detection step comprises detecting, from the acceleration ($\mathbf{a}_{xy}$) and the angular velocity ($\omega_Z$) acquired from the measurement system (10), a movement associated with the attachment of the measurement system (10) on a support (120), the movement being defined at least in part by the guide element (122).

2. The method according to claim 1, wherein the movement comprises rotating the measurement system relative to the support, said rotation being defined by the guide element (122).

3. The method according to claim 1 or 2, wherein

each guide element (122) of each support of said plurality of supports comprises a set of reliefs (123, 123') which is different for each support,

the detection step comprises detecting the coming into contact, during said movement, of the cooperation element (111) with the set of reliefs (123, 123'), and

the selection step comprises selecting the path-determination algorithm based on the set of reliefs (123, 123') with which the cooperation element has come into contact.

4. A method of determining a path of a user able to move according to several movement modes, comprising:

selecting, using the method according to any one of claims 1 to 3, a path-determination algorithm associated with a new movement mode of the user; and

a path determination step comprising applying the thus selected path-determination algorithm to the data acquired after said selection.

5. The method of determining a path of a user according to claim 4, further comprising a transmission step comprising transmitting the path determined during the path determination step to an outside device.

6. A program comprising instructions for executing the method according to any one of claims 1 to 5 when said program is executed by a computer.

7. A computer-readable recording medium on which is recorded a computer program comprising instructions for executing the method according to any one of claims 1 to 5.

8. A device for determining a path of a user able to move according to several movement modes, the device comprising:

a measuring system (10) comprising an accelerometer (33) and a gyrometer (34); and

a computing unit configured to implement:

a detection step comprising detecting whether the user changes movement mode, and is thus moving in a new movement mode distinct from a movement mode in which the user was moving until then;

a selection step comprising selecting, in the case where it was detected in the detection step that the user changed movement modes and is moving in the new movement mode, a path-determination algorithm associated with the new movement mode; and

a path determination step comprising applying the determination algorithm selected in the selection step to the acquired data;

**characterized in that**

the measurement system (10) is configured to be detachably attached to a plurality of supports (120), and comprises a cooperation element (111) able to cooperate with a guide element (122) provided on each support of said plurality of supports,

the detection step comprises detecting, from the acceleration ($\mathbf{a}_{xy}$) and the angular velocity ($\omega_Z$) measured by the accelerometer (33) and the gyrometer (34), a movement associated with the attachment of the measurement system (10) on a support (120), the movement being defined at least in part by the guide element (122).

9. The device according to claim 8, wherein the movement comprises a rotation of the measuring system (10) relative to the support (120), said rotation being defined by the guide element (122).

10. The device according to claim 8 or 9, wherein

each guide element (122) of each support of said plurality of supports comprises a set of reliefs (123, 123') which is different for each support (120),

the detection step comprises detecting the coming into contact, during said movement, of the cooperation element with the set of reliefs (123, 123'), and

the selection step comprises selecting the path-determination algorithm based on the set of reliefs (123, 123') with which the cooperation element (111) has come into contact.

11. A system (1) for determining a path of a user able to move according to several movement modes, comprising:

the device according to any one of claims 8 to 10; and

a plurality of supports (120), the cooperation element (111) being able to cooperate with a guide element (122) provided on each support of said plurality of supports (120).

12. The system according to claim 11, wherein each guide element (122) of each support of said plurality of supports (120) comprises a set of reliefs (123, 123') which is different for each support (120).

FIG.1

1

14

11

10

11A

11A

11A

13

FIG.2A

18

15

19

12

Z

14    13    10

15    11

12

120

FIG.2B

200

Z

14    13    10

11

15

12

120

FIG.2C

120'

FIG.3A

FIG.3B

FIG.4A

FIG.4B

FIG.5A

FIG.5B

FIG.5C

1 1 1 1 (bin) = 15(dec)

FIG.6A

1 0 1 1 (bin) = 11(dec)

FIG.6B

0 0 1 1 (bin) = 3(dec)

FIG.6C

0 1 0 1 (bin) = 1(dec)

FIG.6D

**EP 3 682 195 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2014378786 A
- US 2016138935 A
- US 2012083705 A